# EUROPÄISCHE PATENTSCHRIFT

(11) **EP 1 165 331 B1**
(45) Veröffentlichungstag und Bekanntmachung des Hinweises auf die Patenterteilung: **03.09.2003**
(21) Anmeldenummer: 00985173.4
(22) Anmeldetag: 16.12.2000
(51) Int. Cl.: B60G 15/07, B60G 15/06

(54) **ANORDNUNG MIT EINER SCHRAUBENFEDER UND EINEM STÜTZLAGER FÜR FEDERBEINE**
ARRANGEMENT WITH A HELICAL SPRING AND A SUPPORT BEARING FOR SPRING STRUTS
DISPOSITIF COMPORTANT UN RESSORT A BOUDINS ET UN PALIER SUPPORT POUR JAMBES DE FORCE A RESSORT

(30) Priorität: 31.01.2000 DE 10004121
(43) Veröffentlichungstag der Anmeldung: 02.01.2002
(73) Patentinhaber: INA-Schaeffler KG, 91074 Herzogenaurach (DE); Muhr und Bender KG, 57439 Attendorn (DE)
(72) Erfinder: ERHARDT, Herbert, 91074 Herzogenaurach (DE); GRAU, Ulrich, 91488 Emskirchen (DE); MEYER, Gerhard, 91611 Lehrberg (DE); ZERNICKEL, Alexander, 91074 Herzogenaurach (DE); KOBELEV, Vladimir, 57439 Attendorn (DE); RÖHLING, Markus, 57223 Kreuztal (DE)
(74) Vertreter: Harwardt, Günther, Dipl.-Ing.
(86) Internationale Anmeldenummer: EP0012835
(87) Internationale Veröffentlichungsnummer: WO01056818

(56) Entgegenhaltungen:
- WO-A-89/05242
- DE-A- 3 501 106
- DE-A- 4 110 471
- FR-A- 2 540 586
- FR-A- 2 670 437
- FR-A- 2 730 673
- FR-A- 2 768 659

## Beschreibung

Die Erfindung betrifft eine Anordnung mit einer Schraubenfeder und einem Stützlager für Federbeine, insbesondere für Radachsschenkel tragende Federbeine, eines Kraftfahrzeuges, umfassend ein Wälzlager, das auf einer ersten Achse zentriert angeordnet ist, einen ersten Aufnahmekörper, der unterhalb des Wälzlagers angeordnet ist und dieses aufnimmt, sowie eine Schraubenfeder mit einer Kraftwirkungslinie, die gegenüber der ersten Achse um einen Winkel angestellt ist, und mit einem ersten Abschnitt an ihrem dem Wälzlager zugewandten Ende, der den ersten Aufnahmekörper zumindest teilweise umwindet.

Federbeine für Kraftfahrzeuge umfassen einen Stoßdämpfer, der an seinem oberen Ende mit der Fahrzeugkarosserie und an seinem unteren Ende mit dem Radachsschenkel verbunden ist, eine den Stoßdämpfer umgebende Schraubenfeder, deren unteres Ende mittels einem Schraubenfedersitz mit dem Stoßdämpfer verbunden ist, sowie ein Stützlager mit einem Aufnahmekörper, der die oberste Endwindung der Schraubenfeder aufnimmt und mit dieser fest verbunden ist und mit einem Wälzlager, welches einerseits mit dem Aufnahmekörper und andererseits mit der Fahrzeugkarosserie verbunden ist und welches eine Drehbewegung der Schraubenfeder bei der Lenkbewegung der Räder ermöglicht.

Aus der WO 89/05242 geht eine gattungsgemässe Anordnung hervor, welches ein Stützlager, einen mit diesem verbundenen Aufnahmekörper sowie eine Schraubenfeder umfaßt. Dabei nimmt der Aufnahmekörper den federseitige Lagerring des Stützlagers auf und stützt sich mittels einer Vielzahl von Rippen, die über die Stirnseite des Aufnahmekörpers verteilt sind und die der Feder entsprechende Ausformungen besitzen, gegen die Endwindung der Schraubenfeder ab. Die Schraubenfederachse ist gegenüber der Stoßdämpferachse um einen Winkel angestellt.

Die DE 41 10 471 A1 zeigt ein Federbein mit einer Spiralfeder, die um einen Dämpfer angeordnet ist. Die Kraftwirkungslinie der Spiralfeder ist winklig zur Längsachse des Dämpfers angeordnet. Die Spiralfeder ist an ihrem oberen Ende gegen einen Federteller abgestützt. Die obere Windung der Spiralfeder ist zur Kraftwirkungslinie zentriert angeordnet, wobei der Federteller kein Wälzlager aufweist.

Aus der DE 35 01 106 A1 geht eine Anordnung mit einem Stützlager und einer Schraubenfeder für Federbeine hervor, bei der der Windungsdurchmesser der Schraubenfeder im oberen Bereich bis auf den mittleren Durchmesser des karosserieseitig befestigten Lagers, das die Kolbenstange des Stoßdämpfers elastisch lagert, abnimmt. Dabei ist die Schraubenfederachse gegenüber der Stoßdämpferachse nach außen geneigt und ermöglicht somit einen besseren Querkraftausgleich. Die Querkräfte werden durch das Radialkugellager aufgenommen.

Federbeine, bei denen die Endwindung der Schraubenfeder direkt gegen ein Stützlager abgestützt ist, bei denen ferner die Kraftwirkungslinie der Schraubenfeder gegenüber der Stoßdämpferachse angestellt ist und bei denen das zum Stützlager gehörende Wälzlager auf der Stoßdämpferachse zentriert angeordnet ist, ist das Zusammenspiel zwischen Radial- und Axialkräften im Wälzlager problematisch. Durch die angestellte Schraubenfeder wirken neben den Axialkräften auch Radialkräfte auf das Wälzlager. Dabei sind die Axialkräfte über den Umfang der Endwindung der Schraubenfeder aufgrund von Fertigungstoleranzen nicht konstant, sondern haben am Windungsende ihr Maximum und zwischen dem Windungsende und dem Ende der Auflagefläche zum Wälzlager bzw. zum Aufnahmekörper des Stützlagers ihr Minimum.

Wird die aufgrund der gegenüber der Stoßdämpferachse angestellten Schraubenfeder auf das Lager einwirkende Querkraft so eingeleitet, daß im Bereich der Wirklinie der Querkraft keine Axialkraft vorliegt, dann werden die Kugeln des Lagers an dieser Stelle nicht im Rillengrund gehalten. Sie können aus dem Rillengrund herauslaufen, was einen radialen Versatz der beiden Lagerringe zur Folge hat. Dadurch können sich die die Lagerringe aufnehmenden Dichtringe des Wälzlagers berühren und es kann sich ein erhöhtes Drehmoment einstellen, was wiederum zu einer Verschlechterung der Lenkfunktion und einer Reduzierung der Lagerlebensdauer führt.

Aufgabe der vorliegenden Erfindung ist es daher, eine Anordnung mit einer Schraubenfeder und einem Stützlager insbesondere für Radachsschenkel tragende Federbeine zu schaffen, bei der die Einleitung der von der Schraubenfeder auf das Stützlager einwirkenden Kraft, für eine Ausführungsform, bei der die Wirkungslinie der Schraubenfeder gegenüber der Achse des zum Stützlager gehörenden Wälzlagers angestellt ist, optimiert ist.

Diese Ausbildung wird erfindungsgemäß durch eine eingangs beschriebene Anordnung gelöst, bei der der erste Aufnahmekörper auf der ersten Achse zentriert ist und der erste Abschnitt der Schraubenfeder ein Windungsende aufweist, das innerhalb des Bereichs eines vorbestimmten Winkels um die Kraftwirkungslinie zu einer ersten Ebene, die durch die Kraftwirkungslinie und durch die erste Achse aufgespannt wird, liegt, wobei die erste Ebene die Winkelhalbierende des Winkels darstellt.

Von Vorteil bei dieser Ausbildung ist, daß die Axialkräfte, die das Wälzlager vorspannen und somit für einen Kontakt der Wälzkörper mit den Lagerringen sorgen, ihr Maximum im Bereich der Wirklinie der Querkraft haben. Dadurch wird wirksam vermieden, daß die Wälzkörper des Wälzlagers aus den durch die Lagerringe gebildete Rillen herauslaufen, was zu einer Verschlechterung der Lagerfunktion und einer Reduzierung der Lebensdauer führen würde. Dadurch, daß die Schraubenfeder direkt gegen den Aufnahmekörper anliegt, wird die Bauweise vereinfacht, was wiederum zu reduzierten Herstellungskosten führt.

In weiterer Ausgestaltung der Erfindung besitzt die Schraubenfeder einen ersten Abschnitt, der ausgehend vom Windungsende einen zumindest über einen vorbestimmten Umschlingungswinkel um die Achse konstanten Radius aufweist. Vorzugsweise ist dabei der erste Abschnitt der Schraubenfeder über den Umschlingungswinkel in einer zur Achse senkrechten zweiten Ebene angeordnet und ferner ist der Radius des ersten Abschnittes der Schraubenfeder dem Radius des Wälzlagers angenähert. Durch diese Ausgestaltung kann die Federkraft ohne Verwendung zusätzlicher Bauteile direkt in das Wälzlager eingeleitet werden.

In weiterer Ausgestaltung besitzt die Schraubenfeder im Anschluß an den ersten Abschnitt der Endwindung einen gekröpften zweiten Abschnitt, der den Radius der Schraubenfeder vergrößert und in dem ferner die Schraubenfeder die zweite Ebene verläßt. Durch die Kröpfung der Schraubenfeder sind Umschlingungen der Endwindung um den ersten Aufnahmekörper bzw. das Wälzlager von 200° und mehr erreichbar. Somit kann die Federkraft über einen großen Umschlingungswinkel auf das Wälzlager einwirken, so daß sich eine gleichmäßige Kraftverteilung ergibt.

In weiterer Ausgestaltung ist zwischen dem ersten Anschnitt der Schraubenfeder und dem Lageraufnahmekörper ein Dämpfungskörper angeordnet. Dieser verhindert eine Übertragung von Schwingungen auf die Karosserie des Fahrzeuges und erhöht somit den Fahrkomfort.

Vorzugsweise ist das Wälzlager als Axialwälzlager oder als Schrägkugellager gestaltet, da im wesentlichen Axialkräfte von der Schraubenfeder auf das Wälzlager einwirken.

In bevorzugter Ausgestaltung ist der vorbestimmte Winkel gleich 30°. Dies hat den Vorteil, daß die von der Schraubenfeder auf das Wälzlager einwirkenden Axialkräfte ihr Maximum in dem Bereich des Umschlingungswinkels haben, in dem die Querkräfte, die aus der Anstellung der Schraubenfeder gegenüber der Achse resultieren, wirken. Dabei kann das Windungsende entweder auf der Seite der Anstellung der Kraftwirkungslinie gegenüber der ersten Achse oder auf der der Anstellung abgeneigten Seite angeordnet sein.

Ein bevorzugtes Ausführungsbeispiel ist in der Zeichnung schematisch dargestellt.

Es zeigt
- Figur 1: den Längsschnitt einer Schraubenfeder mit oberem Stützlager und
- Figur 2: einen Längsschnitt des Stützlagers gemäß Figur 1,
- Figur 3: die Kraftverteilung an der Kontaktstelle der Schraubenfeder mit dem Wälzlager und
- Figur 4: eine Draufsicht auf eine Schraubenfeder gemäß Figur 1.

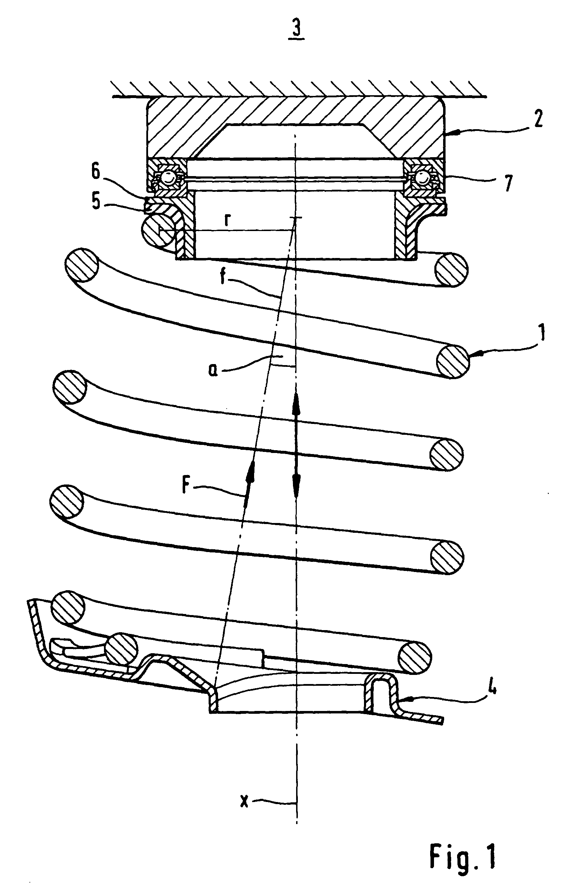

Aus Figur 1 geht eine Anordnung mit einer Schraubenfeder 1 und einem oberen Stützlager 2 für ein Federbein 3 eines Kraftfahrzeuges hervor.

Das obere Ende der Schraubenfeder 1 stützt sich über einen Dämpfungskörper 5 in Form einer Gummiunterlage sowie einen Aufnahmekörper 6 an einem karosserieseitig angeordneten Wälzlager 7, das auf einer Achse x angeordnet ist, ab. Dabei ist die Kraftwirkungslinie f der Schraubfeder gegenüber der Achse x um einen Winkel a angestellt. An ihrem unteren, der Radachse zugewandten Ende, wird die Schraubenfeder 1 von einem Schraubenfedersitz 4 aufgenommen. Der Schraubenfedersitz 4 ist seinerseits mit einem Stoßdämpfer zu verbinden.

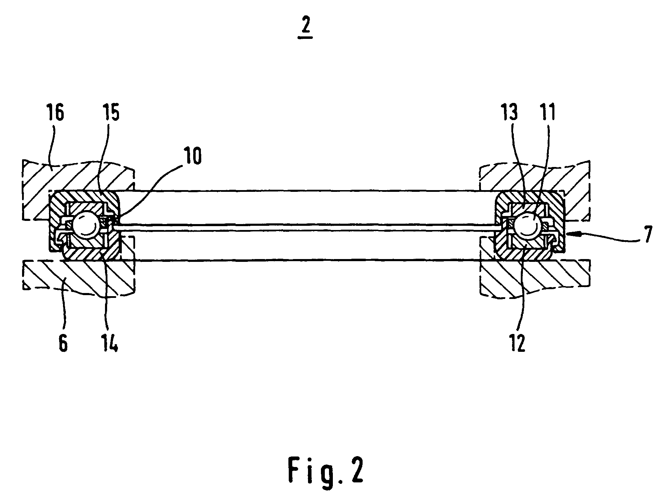

Wie aus Figur 2 hervorgeht ist das Wälzlager 7 als gekapseltes Axialrillenkugellager gestaltet und besitzt einen Käfig 10 sowie in den Durchbrüchen des Käfigs angeordneten Kugeln 11, zwei Lagerringe 12, 13, sowie einen unteren Dichtring 14, der den unteren Lagerring 12 aufnimmt und einen oberen Dichtring 15, der den oberen Lagerring 13 aufnimmt. Zur Aufnahme von Axial- und Radialkräften wird das Wälzlager 7 zwischen dem Aufnahmekörper 6 unten und einer mit der Fahrzeugkarosserie zu verbindenden Befestigungsglied 16 oben geführt.

Der Aufnahmekörper 6 und der Dämpfungskörper 5 sind in Richtung der Schraubenfeder 1 hülsenförmig gestaltet, so daß sie von der Schraubenfeder 1 umschlungen werden können. Der Radius r des ersten Abschnittes 8 der Schraubenfeder 1, in dem diese den Aufnahmekörper 6 bzw. den Dämpfungskörper 5 über den Winkel c umschlingt, entspricht in etwa dem Radius des Wälzlagers 7. Dies hat den Vorteil, daß die Federkraft F unmittelbar auf das Wälzlager 7 einwirken kann.

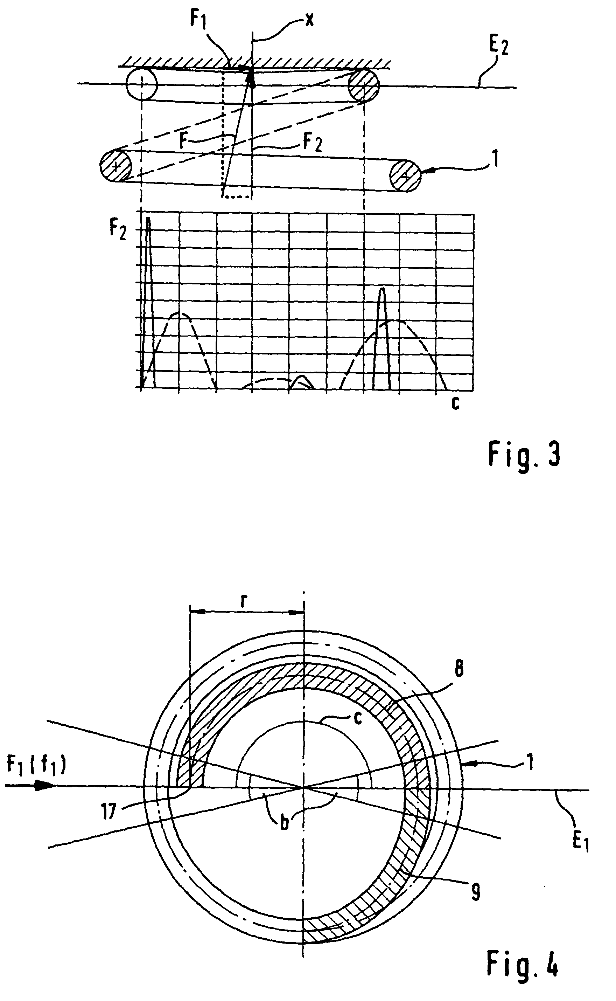

Die Krafteinleitung der Schraubenfeder 1 in den Aufnahmekörper 6 und somit auch in das Wälzlager 7 ist über den den Aufnahmekörper 6 umschlingenden ersten Abschnitt 8 der Schraubenfeder 1 nicht konstant. Vielmehr werden, wie aus den Figuren 3 und 4 hervorgeht, die Maximalkräfte am Windungsende 17 und in dem Abschnitt der Schraubenfeder 1 eingeleitet, in dem die Schraubenfeder 1 gerade noch in Anlage mit dem Wälzlager 7 bzw. dem Aufnahmekörper 6 ist, bevor sie 1 die zweite Ebene E₂ verläßt. Da die axiale Vorspannung des Wälzlagers 7 in dem Bereich, in dem die Schraubenfeder 1 keine Axialkraft F₂ in das Wälzlager 7 einleitet, minimal ist, besteht die Gefahr, daß die aus der Anstellung der Schraubenfeder 1 gegenüber der Achse x des Wälzlagers 7 resultierende Querkraft F₁ die Lagerringe 12, 13 auseinanderdrückt.

Um dies zu vermeiden, ist die Schraubenfeder 1 so angeordnet, daß das Maximum der auf das Wälzlager 7 einwirkenden Axialkräfte F₂ im Bereich der Wirkungslinie f₁ der Querkräfte F₁ liegt. Dies wird dadurch erreicht, wie aus Figur 4 hervorgeht, daß das Windungsende 17 der Schraubenfeder 1 innerhalb eines Winkels b gegenüber der Ebene E₁, welche von der Kraftwirkungslinie f und der Achse x aufgespannt wird, angeordnet ist.

Dabei kann das Windungsende 17 sowohl auf der der Anstellung der Kraftwirkungslinie f gegenüber der Achse x zugewandten als auch auf der der Anstellung abgewandten Seite des Federbeines 3 angeordnet sein.

Die Anordnung des Windungsendes 17 der Schraubenfeder 1 in dem Bereich, der durch den Winkel b um die Wirkungslinie f₁ der Querkräfte F₁ aufgespannt wird, hat zur Folge, daß diejenigen Kugeln 11 des Wälzlagers 7, die sich gerade in dem besagten Bereich befinden, besonders stark in axialer Richtung vorgespannt sind. Die Kugeln 11 bleiben im Rillengrund der Lagerringe 12, 13 angeordnet, womit ein radialer Versatz der Lagerringe 12, 13 und somit auch der Dichtringe 14, 15 zueinander vermieden wird.

### Bezugszeichenliste

- 1: Schraubenfeder
- 2: oberes Stützlager
- 3: Federbein
- 4: Schraubenfedersitz
- 5: Dämpfungskörper
- 6: Aufnahmekörper
- 7: Wälzlager
- 8: erster Abschnitt der Schraubenfeder
- 9: zweiter Abschnitt der Schraubenfeder
- 10: Käfig
- 11: Kugeln
- 12: unterer Lagerring
- 13: oberer Lagerring
- 14: unterer Dichtring
- 15: oberer Dichtring
- 16: Befestigungsglied
- 17: Windungsende

- a: Winkel
- b: Winkel
- c: Umschlingunswinkel
- f: Kraftwirkungslinie
- f₁: Radialkraftwirkungslinie (= Querkraftwirkungslinie)
- r: Radius des ersten Abschnittes
- x: Achse
- E₁: erste Ebene
- E₂: zweite Ebene
- F: Federkraft
- F₁: Radialkraft (= Querkraft)
- F₂: Axialkraft

## Patentansprüche

1. Anordnung mit einer Schraubenfeder und einem Stützlager für Federbeine, insbesondere für Radachsschenkel tragende Federbeine, eines Kraftfahrzeuges, umfassend
- ein Wälzlager (7), das auf einer ersten Achse (x) zentriert angeordnet ist,
- einen ersten Aufnahmekörper (6), der unterhalb des Wälzlagers (7) angeordnet ist und dieses aufnimmt, sowie
- eine Schraubenfeder (1) mit einer Kraftwirkungslinie (f), die gegenüber der ersten Achse (x) um einen Winkel (a) angestellt ist, und mit einem ersten Abschnitt (8) an ihrem dem Wälzlager (7) zugewandten Ende, der den ersten Aufnahmekörper (6) zumindest teilweise umwindet,
**dadurch gekennzeichnet,**
**daß** der erste Aufnahmekörper (6) auf der ersten Achse (x) zentriert ist und
**daß** der erste Abschnitt (8) der Schraubenfeder (1) ein Windungsende (17) aufweist, das innerhalb des Bereichs eines vorbestimmten Winkels (b) um die Kraftwirkungslinie (f) liegt, wobei eine erste Ebene (E₁), die durch die Kraftwirkungslinie (f) und durch die erste Achse (x) aufgespannt wird, die Winkelhalbierende des Winkels (b) darstellt.

2. Anordnung nach Anspruch 1,
**dadurch gekennzeichnet,**
**daß** der erste Abschnitt (8) der Schraubenfeder (1) ausgehend vom Windungsende (17) einen zumindest über einen vorbestimmten Umschlingungswinkel (c) um die Achse (x) konstanten Radius (r) aufweist.

3. Anordnung nach einem der Ansprüche 1 oder 2,
**dadurch gekennzeichnet,**
**daß** der Umschlingungswinkel (c) größer als 200° ist.

4. Anordnung nach einem der Ansprüche 1 bis 3,
**dadurch gekennzeichnet,**
**daß** der erste Abschnitt (8) der Schraubenfeder (1) über den Umschlingungswinkel (c) in einer zur Achse (x) senkrechten zweiten Ebene (E₂) angeordnet ist.

5. Anordnung nach Anspruch 2,
**dadurch gekennzeichnet,**
**daß** der Radius (r) des ersten Abschnittes (8) der Schraubenfeder (1) dem Radius des Wälzlagers (7) angenähert ist.

6. Anordnung nach einem der Ansprüche 1 bis 5,
**dadurch gekennzeichnet,**
**daß** die Schraubenfeder (1) im Anschluß an den ersten Abschnitt (8) einen gekröpften zweiten Abschnitt (9) besitzt, der den Radius der Schraubenfeder (1) vergrößert und in dem die Schraubenfeder (1) die zweite Ebene (E₂) verläßt.

7. Anordnung nach einem der Ansprüche 1 bis 6,
**dadurch gekennzeichnet,**
**daß** zwischen dem ersten Abschnitt (8) der Schraubenfeder (1) und dem Aufnahmekörper (6) ein Dämpfungskörper (5) angeordnet ist.

8. Anordnung nach einem der Ansprüche 1 bis 7,
**dadurch gekennzeichnet,**
**daß** das Wälzlager (7) als Axialwälzlager oder als Schrägkugellager gestaltet ist.

9. Anordnung nach einem der Ansprüche 1 bis 8,
**dadurch gekennzeichnet,**
**daß** der vorbestimmte Winkel (b) gleich 30° ist.

10. Anordnung nach einem der Ansprüche 1 bis 9,
**dadurch gekennzeichnet,**
**daß** das Windungsende (17) auf der Seite der Ausstellung der Kraftwirkungslinie (f) gegenüber der ersten Achse (x) oder auf der der Ausstellung abgeneigten Seite angeordnet ist.

## Claims

1. An arrangement having a helical spring and a support bearing for spring struts, more particularly for spring struts carrying stub axles, for a motor vehicle, comprising
- a rolling bearing (7) which is arranged so as to be centred on a first axis (x),
- a first receiving member (6) which is arranged underneath the rolling bearing (7) and receives same, as well as
- a helical spring (1) having an effective force line (f) which extends at an angle (a) relative to the first axis (x) and having a first portion (8) at its end which faces the rolling bearing (7) and which first portion (8) is at least partially wound around the first receiving member (6)
**characterised in**
**that** the first receiving member (6) is centred on the first axis (x) and that the first portion (8) of the helical spring (1) comprises a wound end (17) which is positioned within the region of a predetermined angle (b) around the effective force line (f), wherein a first plane (E₁) spanning between the effective force line (f) and the first axis (x) constitutes the bisector of the angle (b).

2. An arrangement according to claim 1,
**characterised in**
**that**, starting from the wound end (17), the first portion (8) of the helical spring (1) comprises a radius (r) which is constant at least over one pre-determined angle of wrap (c) around the axis (x).

3. An arrangement according to any one of claims 1 or 2,
**characterised in**
**that** the angle of wrap (c) is greater than 200°.

4. An arrangement according to any one of claims 1 to 3,
**characterised in**
**that** the first portion (8) of the helical spring (1), across the angle of wrap (c), is arranged in a second plane (E₂) extending perpendicularly relative to the axis (x).

5. An arrangement according to claim 2,
**characterised in**
**that** the radius (r) of the first portion (8) of the helical spring (1) is approximated to the radius of the rolling bearing (7).

6. An arrangement according to any one of claims 1 to 5,
**characterised in**
**that** the helical spring (1) comprises a cranked second portion (9) which adjoins the first portion (8) and which increases the radius of the helical spring (1) and in which the helical spring (1) leaves the second plane (E₂).

7. An arrangement according to any one of claims 1 to 6,
**characterised in**
**that** between the first portion (8) of the helical spring (1) and the receiving member (6) there is arranged a damping member (5).

8. An arrangement according to any one of claims 1 to 7,
**characterised in**
**that** the rolling bearing (7) is provided in the form of a thrust rolling bearing or angular ball bearing.

9. An arrangement according to any one of claims 1 to 8,
**characterised in**
**that** the predetermined angle (b) equals 30°.

10. An arrangement according to any one of claims 1 to 9,
**characterised in**
**that** the wound end (17) is arranged on the side where the effective force line (f) extends at an angle relative to the first axis (x) or on the side facing away from the angular extension of the effective force line (f).

## Revendications

1. Agencement comprenant un ressort hélicoïdal et un palier de soutien pour des bras de suspension, en particulier pour des bras de suspension portant un demi-essieu de roue, dans un véhicule automobile, comprenant :
-- un palier à roulements (7) agencé de manière centrée sur un premier axe (x),
-- un premier corps récepteur (6), qui est agencé au-dessous du palier à roulements (7) et qui reçoit celui-ci, et
-- un ressort hélicoïdal (1) avec une ligne d'action de force (f) disposée sous un angle (a) par rapport au premier axe (x) et comprenant un premier tronçon (8), à son extrémité tournée vers le palier à roulements (7), qui entoure au moins partiellement le premier corps récepteur (6),
**caractérisé en ce que** :
le premier corps récepteur (6) est centré sur le premier axe (x), et
le premier tronçon (8) du ressort hélicoïdal (1) comprend une extrémité de spire (17) qui se trouve à l'intérieur de la région d'un angle prédéterminé (b) autour de la ligne d'action de force (f), et dans lequel un premier plan (E1), défini par la ligne d'action de forces (f) et par le premier axe (x), représente la bissectrice de l'angle (b).

2. Agencement selon la revendication 1, **caractérisé en ce que** le premier tronçon (8) du ressort hélicoïdal (1) présente, partant de l'extrémité de spire (17), un rayon (r) constant au moins sur un angle d'enroulement prédéterminé (c) autour de l'axe (x).

3. Agencement selon l'une ou l'autre des revendications 1 et 2, **caractérisé en ce que** l'angle d'enroulement (c) est supérieur à 200°.

4. Agencement selon l'une des revendications 1 à 3, **caractérisé en ce que** le premier tronçon (8) du ressort hélicoïdal (1) est agencé au-delà de l'angle d'enroulement (c) dans un second plan (E₂) perpendiculaire à l'axe (x).

5. Agencement selon la revendication 2, **caractérisé en ce que** le rayon (r) du premier tronçon (8) du ressort hélicoïdal (1) est voisin du rayon du palier à roulements (7).

6. Agencement selon l'une des revendications 1 à 5, **caractérisé en ce que** le ressort hélicoïdal (1) possède, au raccordement avec le premier tronçon (8), un second tronçon coudé (9) qui augmente le rayon du ressort hélicoïdal (1) et dans lequel le ressort hélicoïdal (1) quitte le second plan (E₂).

7. Agencement selon l'une des revendications 1 à 6, **caractérisé en ce qu'**un corps d'amortissement (5) est agencé entre le premier tronçon (8) du ressort hélicoïdal (1) et le corps récepteur (6).

8. Agencement selon l'une des revendications 1 à 7, **caractérisé en ce que** le palier à roulements (7) est conçu sous la forme de palier à roulements axial, ou sous la forme de palier à billes conique.

9. Agencement selon l'une des revendications 1 à 8, **caractérisé en ce que** l'angle prédéterminé (b) est égal à 30°.

10. Agencement selon l'une des revendications 1 à 9, **caractérisé en ce que** l'extrémité de spire (17) est agencée sur le côté de l'application de la ligne d'action de force (f) par rapport au premier axe (x), ou sur le côté opposé à celui de l'application.
